# EUROPEAN PATENT SPECIFICATION

(11) **EP 0 768 194 B1**
(45) Date of publication and mention of the grant of the patent: **13.06.2001**
(21) Application number: 96202766.0
(22) Date of filing: 04.10.1996
(51) Int. Cl.: B60C 25/14

(54) **Tyre inflating machine**
Reifenfüllgerät
Appareil de gonflage de pneus

(30) Priority: 12.10.1995 IT RE950062; 17.07.1996 IT RE960053
(43) Date of publication of application: 16.04.1997
(73) Proprietor: CORGHI S.p.A., I-42015 Correggio Emilia (Reggio Emilia) (IT)
(72) Inventor: Corghi, Remo, 42015 Correggio, Emilia (IT)
(74) Representative: Corradini, Corrado

(56) References cited:
- DE-A- 1 912 722
- US-A- 3 774 664
- US-A- 3 783 928
- US-A- 4 865 104

## Description

This patent relates to machines for inflating tyres, and in particular tubeless tyres, after they have been mounted on their respective wheel rims.

Tyres are mounted on wheel rims by appropriate known machines which insert both the tyre beads into the wheel rim edges.
That groove in the wheel rim which receives the bead sides comprises, immediately inwards of the edge, two substantially cylindrical regions onto which the tyre bead must be lifted such as to form a seal.

Machines are also known to ensure that the tyre edges are automatically and correctly lifted onto the respective seal regions, so that the compressed air fed into the tyre through the usual inflation valve does not escape to the outside.

Document US-A-3774664 discloses an inflating machine for motor vehicle tyres of the tubeless type, comprising a first bell cap having a flat rim arranged to sealedly receive the tyre side wall by its bearing thereagainst.
Means axially movable coaxial to said bell cap are provided for sealedly receiving the wheel rim edge by its bearing thereagainst so that its central part becomes closed.
Said means for receiving the wheel rim are lowered within said bell cap against elastic means, said lowering being caused by an axial pusher acting elastically on the centre of the wheel rim. Feeding compressed air to the wheel inflation valve results in an increase of pressure within the tire and within the chamber defined by the tyre, the wheel rim and the first bell cap, so that first the tyre beads are correctly received onto the respective seal regions of the wheel rim and then the tyre is completely inflated.

Similar machines are disclosed in the US-A-4 865 104 and in the DE-A-1 912 722.
The above mentioned known machines have the drawback that they can work only with a limited range of wheel dimensions, because out of said range the side wall of the tyre does not mate correctly with the flat rim of the bell cap.

The object of the patent is to provide an inflating machine for motor vehicle tyres of the tubeless type suitable to operate with a large range of tyre dimensions.

A further object of the patent is to ensure that the tyre is inflated under conditions of total safety, such as to protect the operator against the consequences of a possible explosion.

A further important object of the invention is to provide operating means able not only to automate the operations involved, but also to form an integral part of a tyre inflation and deflation line, or rather to form an integral part of one of the machines included in the line.

The objects of the invention are achieved by a combination of special inflation means which require compressed air to be fed to the tyre only via the usual inflation valve, without further action of the operator other than connecting the inflation hose to the inflation valve, plus protection means which can be positioned before starting the inflation process.

The characteristics of the invention enabling the objects to be attained are defined in the claims.

The merits of the invention, together with its constructional.and operations characteristics, will be apparent from the detailed description given hereinafter, with reference to the accompanying drawings.

Figure 1 is a plan view of a device according to the prior art.

Figure 2 is a section on the plane II-II of Figure 1.

Figure 3 is a section on the plane III-III of Figure 1.

Figure 4 is a vertical section of a preferred embodiment of the operating means of the invention.

Figure 5 is a vertical section through the tyre demounting machine of the invention comprising the operating means of Figure 4.

Figure 5A is an enlarged view of the lower part of Figure 5.

Figure 6 shows the invention positioned in line with a tyre mounting machine and a balancing machine.

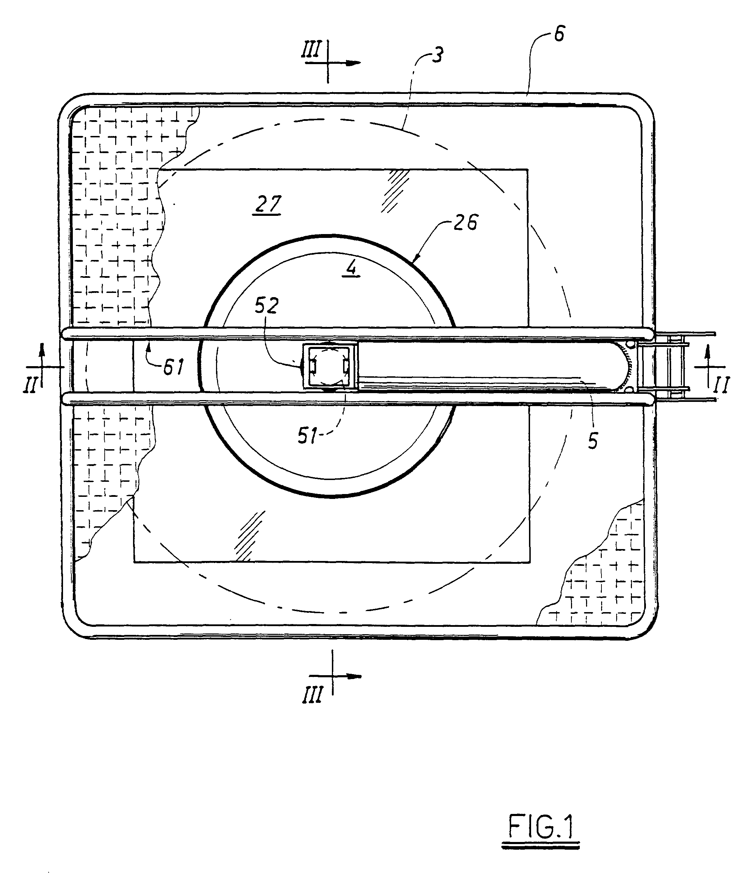

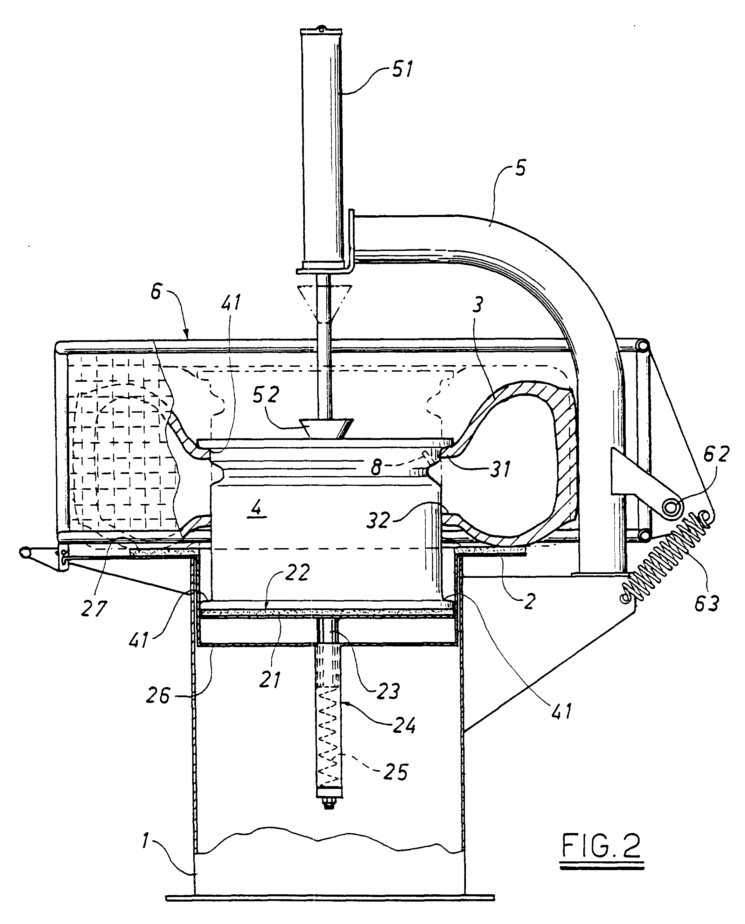

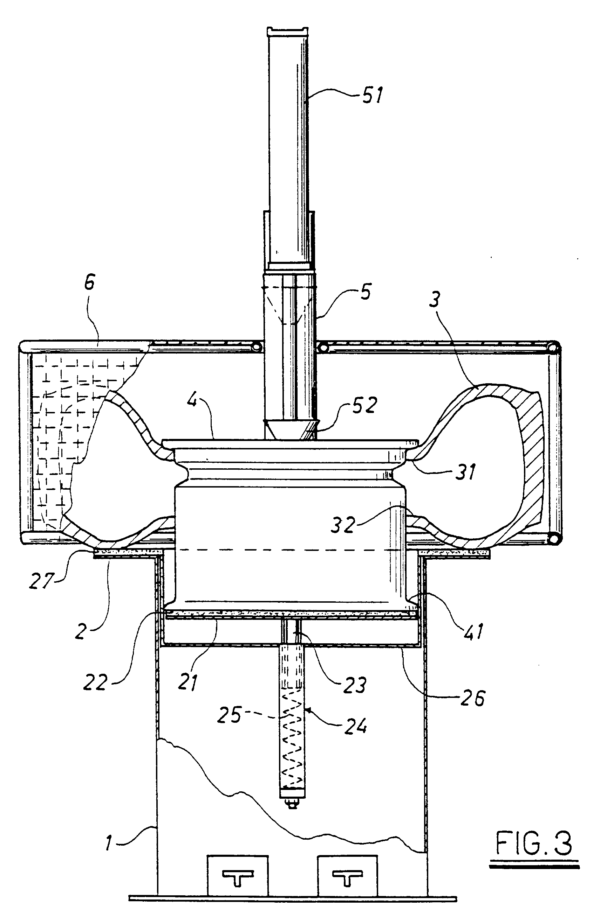

Figures 1, 2 and 3 show an inflating machine composed of a base 1 having a working surface composed of the horizontal rim 2 of a bell cap 26 and of a central part 21, on which the combined tyre 3 and wheel rim 4 are rested.

In the example the surface is horizontal and is positioned below the combined wheel rim and tyre, however there is nothing to prevent it being rested on top of said combination, or its orientation being other than horizontal.

An inflating machine according to the preamble of claim 1 is known from US-A-3 774 664.

The tyre 3 and wheel rim 4 are simply mounted one on the other, generally without the tyre beads 31, 32 being positioned on the respective sealing regions 41 of the wheel rim.

The circular central part 21 is covered with a thick layer 22 of soft rubber, and is supported at its centre by a lower shaft 23, guided by a telescopic tube 24 and maintained raised by a spring 25.

The central part 21 is lowered and raised within the sealed bell cap 26.

It should be noted that the diameter of the part 21 must be just greater than the diameter of the wheel rim.

About the central part 21 the flat rim 2 of the bell cap 26 is also covered with a soft rubber layer 27, similar to the layer covering the central part.

A bracket 5 overlies the flat rim 2 and carries a vertical pneumatic pusher 51 aligned with the underlying shaft 23, and provided with a conical plug 52.

A mesh cage 6 comprising an open central region 61 to allow passage of said bracket 5 is hinged at 62 to the rear of the base 1 and is balanced by springs 63.

When the tyre and wheel rim have been arranged on the flat rim 2 and central part 21 as indicated in the figures, the cage is lowered to protect the operator until inflation of the tyre 3 is completed.

The operation of the device is very simple.

The operator places the combined wheel rim and tyre on the working surface, taking care that the wheel rim lies only on the central part 21 and is substantially coaxial with the upper pusher 51, and that the tyre wall rests on the rim 2.

Having done this, the operator connects the compressed air feed hose to the tyre inflation valve 8, and lowers the protection cage 6 onto the tyre.

He then operates the upper pusher 51, which acts via the plug 52 on the hub of the wheel rim 4, to elastically lower this latter and the underlying central part 21 into the sealed bell cap 26, whereas the wall of the tyre 3 remains sealedly resting on the flat rim 2 of the bell cap.

In this manner the upper tyre bead 31 is compelled to adhere perfectly sealed against the wheel rim.

On opening the compressed air feed, the chamber formed by the central part 21, the wheel rim, the tyre, the flat rim 2 of the underlying bell cap 26 and this latter itself is pressurized.

The compressed air fed into said chamber causes the central part 21 to rise by overcoming the elastic thrust of the pusher 51, until the tyre lower bead 32 makes sealed contact with the lower edge of the wheel rim 4, and from this point onwards the tyre is inflated normally while always remaining enclosed within the mesh cage, which protects the operator should the tyre explode.

It is apparent that although in the described example the bell cap and the relative flat rim 2 are fixed while the central part 21 is movable, to achieve the relative movement between said two elements the central part can be made fixed and the bell cap movable, with the bell cap positioned inverted and descending from above.

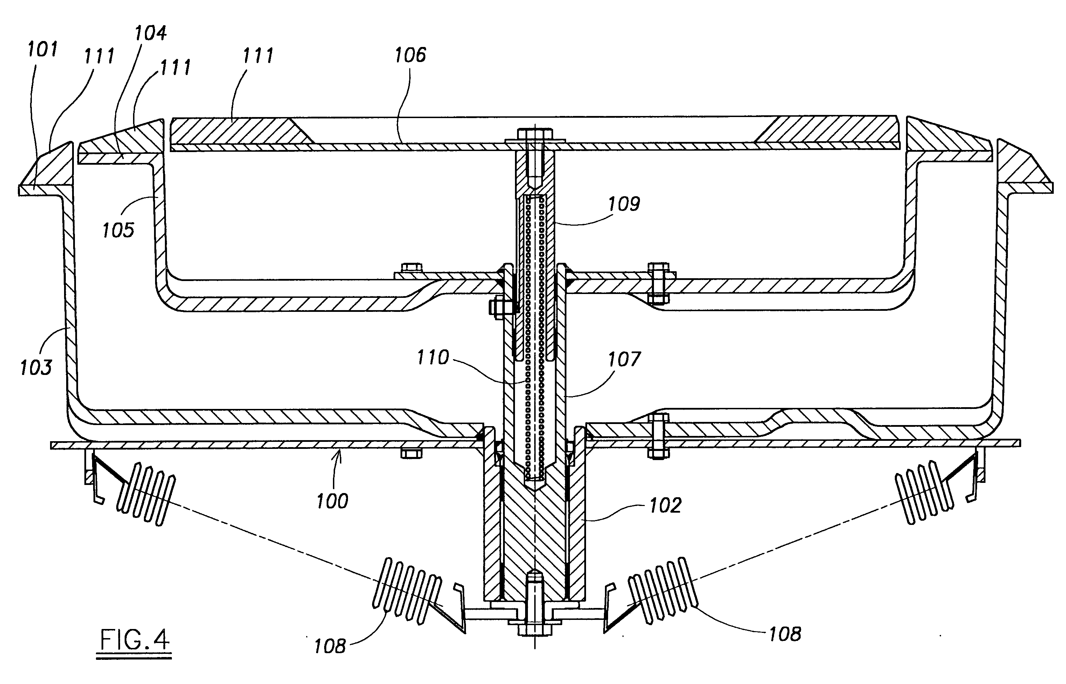

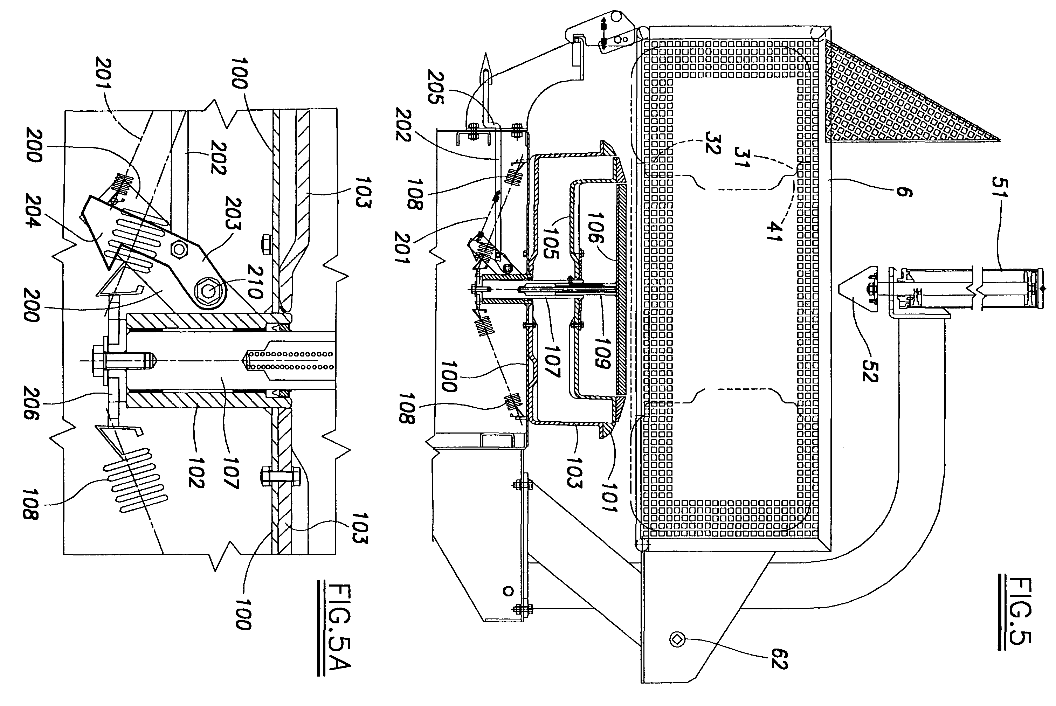

The device according to the present invention is shown in figures 4 and 5. The invention is an improvement of the above described machine (shown in figures 1 to 3), being arranged to operate on a wider range of wheel rims, including all types present on the market having an outer diameter of between 12 and 19 inches.

In Figures 4 and 5, the inflating machine is shown composed of a base 100 which supports the machine operating surface.

This latter comprises a first flat annular flange 101 forming the rim of a first bell cap 103, and a second flat annular flange 104 forming the rim of a second bell cap 105 which is concentric with and internal to said first bell cap, plus a central flat circular portion 106 which is coaxial to said second bell cap and slides axially within it.

The first bell cap 103 is fixed to the machine base 100.

The second bell cap 105 is supported by a first central shaft 107 which slides in a sealed manner within a telescopic guide positioned at the centre of the first bell cap 103.

The second bell cap 105 can hence undergo downward elastic movements against the springs 108 which connect the base of the shaft 107 to the machine base 100.

Vertical travel of the shaft 107 and hence of the second bell cap 105 can be prevented if having to operate on small-diameter wheel rims.

For this purpose, fixed to the guide 102 there is a projecting gusset 200 to which there is pivoted at 210 a profiled lever 203 terminating in a pawl 204.

The profiled lever 203 is connected to an operating rod 202 comprising a step 205 by which when in its retracted position it hooks onto the edge of a hole provided in the side wall of the base 100.

A spring 201 is stretched between an intermediate point of the rod 202 and the gusset 200, so as to maintain the rod urged towards the right in the figure.

When it is required to prevent vertical travel of the shaft 107, and with it of the second bell cap 105, the rod 202 is raised so as to disengage the step 205 from the hole so that the rod moves towards the right in the figure under the action of the spring 201, so enabling the pawl 204 to position itself below the plate 206 fixed to the base of the shaft, and lock it in position.

A portion of the shaft 107 is hollow to receive and guide a second shaft 109 supporting at its centre the plate 106, which can be moved vertically and elastically within the second bell cap against the spring 110.

The edge of the central portion or plate 106 and the flat rims 101 and 104 are covered with a soft rubber layer 111.

A bracket 5 carries a vertical pneumatic pusher 51 aligned with the underlying shaft 109 and provided with a conical plug 52.

A mesh cage 6 comprising an open central region to allow passage of said bracket 5 is hinged at 62 to the rear of the base 100, and is balanced by springs, not shown.

Again in this case the tyre 3 and wheel rim 4 are simply mounted one on the other, generally without the tyre beads 31, 32 being positioned on the respective sealing regions 41 of the wheel rim.

The wheel rim with its tyre is rested on the working surface in a position coaxial to the shaft 109, with, depending on its dimensions, its edge bearing either on the central portion 106 or on the annular flange 104.

The tyre wall bears either on the flat flange 104 or on the flat flange 101, depending on the particular situation.

Hence in the first case the wheel rim bears on the central portion 106 and the tyre wall bears on the annular flange 104 of the bell cap 105, which is locked in position by the pawl 204.

On feeding air through the inflation valve the chamber defined by the wheel rim, the tyre, the flat flange 104, the bell cap 105 and the central plate 106 becomes pressurized.

The expansion of said chamber compels the lower tyre bead to descend into its seat and seal against the wheel rim, with simultaneous elastic raising of the plate 106 and elastic retraction of the plug 52, from which point the tyre inflation proceeds normally.

Tyre wheel rims greater than a certain size rest with their edge on the flat flange 104, the tyre wall resting on the flat flange 101.

On feeding air through the inflation valve the chamber defined by the wheel rim, the tyre, the flat flange 101, the bell cap 103 and the bell cap 105 becomes pressurized.

The expansion of said chamber compels the lower tyre bead to enter its seat and seal against the wheel rim, with simultaneous elastic raising of the bell cap 105 and elastic retraction of the plug 52, from which point the tyre inflation proceeds normally.

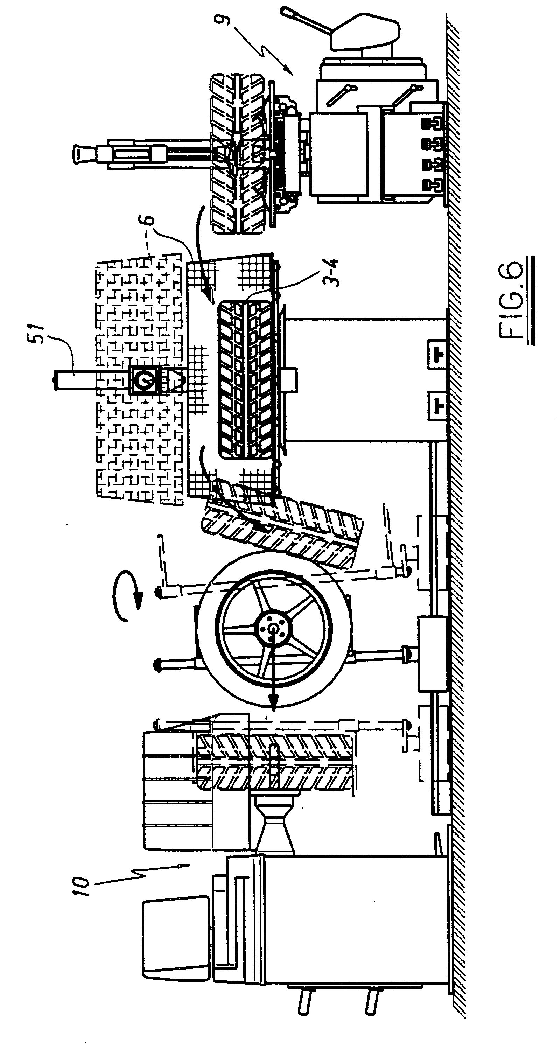

Besides providing rapid and safe tyre inflation, the described devices are suitable for positioning on line between a tyre mounting machine 300 and a wheel balancing machine 400, as shown in Figure 6.

Moreover the aforedescribed means can be easily fitted to a normal tyre mounting machine, so as to be able to carry out correct tyre inflation on it under conditions of maximum safety.

The detailed description of a tyre mounting machine equipped in this manner is omitted, as it can be easily implemented by an expert of the art on the basis of the aforegoing teachings.

## Claims

1. An inflating device for motor vehicle tyres of the tubeless type, comprising a first bell cap (103) having a flat rim (101) arranged to sealedly receive the tyre wall by its bearing thereagainst; means (106) axially movable coaxial to said bell cap (103) for sealedly receiving the wheel rim edge by its bearing thereagainst so that its central pare becomes closed; means (51, 52) for lowering said means (106) axially movable within said bell cap (103) against elastic means; means for feeding compressed air to the wheel inflation valve; characterised in that said lowering being caused by an axial pusher (51, 52) acting elastically on the centre of the wheel rim; said axially movable means consist of a second bell cap (105) having a flat rim (104) arranged to sealedly receive the tyre wall by its bearing thereagainst and supported by a first central shaft (107) movable telescopically in a sealed manner within an axial seat (102) provided in the base of the first bell cap (103), and by a central plate (106) coaxial to said second bell cap (105) and arranged to sealedly receive the wheel rim edge (41) by its bearing thereagainst so that its central pare becomes closed, and supported by a second shaft (109) elastically movable within said first shaft (107).

2. A device as claimed in claim 1, characterised by comprising protection means (6) arranged to receive the wheel within their interior and able to assume two positions, namely a lowered protection position and a raised rest position.

3. A device as claimed in claim 1, characterised in that said axial seat (102) provided in the base of the first bell cap (103) comprises means for pivoting a pawl (204) operable by a rod (202) and movable between a raised position and a lowered position in which it engages below said first central shaft (107), elastic means (201) being provided to maintain said pawl in said locking position.

4. A device as claimed in claim 1, characterised in that the means for lowering those means which are axially movable within their respective bell cap are an axial pusher (51, 52) acting elastically on the central part of the wheel rim (4).

5. A device as claimed in claim 2, characterised in that the protection means (6) consist of a metal mesh hood hinged on a horizontal axis and counterbalanced by suitable springs (63).

6. A device as claimed in claim 2, characterised in that the protection means (6) consist of a metal mesh hood coaxial to the bell cap and operated to descend and rise relative to the wheel undergoing inflation.

7. A device as claimed in the preceding claims, characterised in that the flat rim (101, 104) of said first and second bell cap (103, 105), and that part adjacent to the edge of said central plate (106) are covered with soft rubbery (111).

8. A device as claimed in claim 2, characterised in that said first shaft (107) is connected to the machine base by elastic means (108) which maintain it urged upwards, said second shaft (109) being connected to said first shaft (107) by elastic means (110) which maintain it urged upwards.

## Patentansprüche

1. Aufpumpvorrichtung für schlauchlose Kraftfahrzeugreifen, die eine erste Glockenhaube (103) mit einem flachen Rand (101) aufweist, der so angeordnet ist, daß er die Reifenflanke abgedichtet aufnimmt, indem diese dagegen anliegt; ein koaxiales, axial zu der Glockenhaube (103) bewegbares Mittel (106) zur abgedichteten Aufnahme der Radfelgenkante, indem diese gegen dasselbe anliegt, so daß deren zentraler Teil geschlossen ist; Mittel (51, 52) zur Absenkung des innerhalb der Glockenhaube (103) gegen elastische Mittel axial bewegbaren Mittels (106); Mittel zur Zufuhr von Druckluft zu dem Radaufpumpventil,
**dadurch gekennzeichnet**, daß
die Absenkung durch eine axiale Schubvorrichtung (51,52) veranlaßt wird, die elastisch auf den Mittelpunkt der Radfelge wirkt, wobei das axial bewegbare Mittel aus einer zweiten Glockenhaube (105) mit einem flachen Rand (104) besteht, der so angeordnet ist, daß er die Reifenflanke abgedichtet aufnimmt, indem diese dagegen anliegt, und durch eine erste zentrale Welle (107) getragen ist, die teleskopisch und abgedichtet innerhalb eines in der Basis der ersten Glockenhaube (103) vorgesehenen axialen Lagers (102) bewegbar ist, sowie durch eine koaxial zu der zweiten Glockenhaube (105) angeordnete zentrale Platte (106), die so angeordnet ist, daß sie die Radfelgenkante (41) abgedichtet aufnimmt, indem diese dagegen anliegt, so daß ihr zentraler Teil geschlossen wird, und durch eine zweite, elastisch innerhalb der ersten Welle (107) bewegbare zweite Welle (109) getragen ist.

2. Vorrichtung nach Anspruch 1,
**dadurch gekennzeichnet**, daß
sie Schutzmittel (6) aufweist, die so angeordnet sind, daß sie das Rad innerhalb ihres Inneren aufnehmen und dazu in der Lage sind, zwei Positionen einzunehmen, nämlich eine abgesenkte Schutzposition und eine angehobene Ruheposition.

3. Vorrichtung nach Anspruch 1,
**dadurch gekennzeichnet**, daß
das axiale, in der Basis der ersten Glockenhaube (103) vorgesehene Lager (102) Mittel zum Schwenken einer durch eine Stange (202) betätigbaren Klaue (204) aufweist, die zwischen einer angehobenen Position und einer abgesenkten Position bewegbar ist, in der sie unter der ersten zentralen Welle (107) in Eingriff geht, wobei elastische Mittel (201) vorgesehen sind, um die Klaue in der Arretierungsposition zu halten.

4. Vorrichtung nach Anspruch 1,
**dadurch gekennzeichnet**, daß
es sich bei dem Mittel zur Absenkung der innerhalb ihrer jeweiligen Glockenhaube bewegbaren Mittel um eine axiale, elastisch auf den zentralen Teil der Radfelge (4) wirkende Schubvorrichtung (51, 52) handelt.

5. Vorrichtung nach Anspruch 2,
**dadurch gekennzeichnet**, daß
die Schutzmittel (6) aus einer Metallgitterhaube bestehen, die auf einer Horizontalachse gelenkig aufgehängt, und durch passende Federn (63) ausgewuchtet ist.

6. Vorrichtung nach Anspruch 2,
**dadurch gekennzeichnet**, daß
die Schutzmittel (6) aus einer Metallgitterhaube bestehen, die aus einer koaxial zur Glockenhaube angeordneten Metallgitterhaube bestehen und so betätigt werden, daß sie im Verhältnis zu dem im Aufpumpvorgang befindlichen Rad abgesenkt und angehoben wird.

7. Vorrichtung nach den vorangegangenen Ansprüchen,
**dadurch gekennzeichnet**, daß
der flache Rand (101,104) der ersten und zweiten Glockenhaube (103,105) und der an die Kante der zentralen Platte (106) angrenzende Teil mit Weichgummi (111) überzogen ist.

8. Vorrichtung nach Anspruch 2,
dadurch **gekennzeichnet**, daß
die erste Welle (107) durch elastische Mittel (108) mit der Maschinenbasis verbunden ist, die diese nach oben gedrückt halten, wobei die zweite Welle (109) mit der ersten Welle (107) durch elastische Mittel (110) verbunden ist, die diese nach oben gedrückt halten.

## Revendications

1. Dispositif de gonflage pour pneumatiques du type sans chambre pour véhicules à moteur, comprenant un premier chapeau cloche (103) présentant une jante plate (101) disposée de façon à recevoir de manière étanche la paroi du pneumatique en portant contre elle ; des moyens (106) mobiles axialement coaxiaux audit chapeau cloche (103) pour recevoir de façon étanche le bord de la jante de roue en portant contre lui de sorte que sa partie centrale vient à être fermée ; des moyens (51,52) pour abaisser lesdits moyens (106) mobiles axialement à l'intérieur dudit chapeau cloche (103) à l'encontre de moyens élastiques ; des moyens pour amener de l'air comprimé à la valve de gonflage de la roue ; caractérisé en ce que ledit abaissement étant provoqué par un pousseur axial (51,52) agissant élastiquement sur le centre de la jante de roue, lesdits moyens mobiles axialement sont constitués par un second chapeau cloche (105) comportant une jante plate (104) disposée de façon à recevoir de façon étanche la paroi du pneumatique en portant contre elle et qui est supporté par un premier arbre central (107) mobile télescopiquement d'une manière étanche à l'intérieur d'un siège axial (102) prévu dans l'embase du premier chapeau cloche (103), et par une plaque centrale (106) coaxiale audit second chapeau cloche (105) et qui est disposée de façon à recevoir de façon étanche le bord (41) de la jante de roue en portant contre lui de sorte que sa partie centrale vient à être fermée, et qui est supportée par un second arbre (109) mobile élastiquement à l'intérieur dudit premier arbre (107).

2. Dispositif selon la revendication 1, caractérisé en ce qu'il comprend des moyens de protection (6) disposés pour recevoir la roue intérieurement et susceptibles de prendre deux positions, à savoir une position abaissée de protection et une position soulevée de repos.

3. Dispositif selon la revendication 1, caractérisé en ce que ledit siège axial (102) prévu dans l'embase du premier chapeau cloche (103) comprend des moyens pour faire pivoter un cliquet (204) pouvant être actionné par une tige (202) et étant mobile entre une position soulevée et une position abaissée dans laquelle il vient porter en dessous dudit premier arbre central (107), des moyens élastiques (201) étant prévus pour maintenir ledit cliquet dans ladite position de verrouillage.

4. Dispositif selon la revendication 1, caractérisé en ce que les moyens pour abaisser ces moyens qui sont mobiles axialement à l'intérieur de leur chapeau cloche respectif sont un pousseur axial (51,52) agissant élastiquement sur la partie centrale de la jante (41) de roue.

5. Dispositif selon la revendication 2, caractérisé en ce que les moyens de protection (6) sont constitués d'un capot en mailles métalliques qui est articulé sur un axe horizontal et qui est équilibré par des ressorts appropriés (63).

6. Dispositif selon la revendication 2, caractérisé en ce que les moyens de protection (6) sont constitués d'un capot en mailles métalliques coaxial au chapeau cloche et qui est actionné de façon à descendre et à monter relativement à la roue soumise au gonflage.

7. Dispositif selon les revendications précédentes, caractérisé en ce que la jante plate (101,104) dudit premier et second chapeau cloche (103,105), et cette partie qui est adjacente au bord de ladite plaque centrale (106), sont recouvertes d'un caoutchouc souple (111).

8. Dispositif selon la revendication 2, caractérisé en ce que ledit premier arbre (107) est relié à l'embase de la machine par des moyens élastiques (108) qui le maintiennent sollicité vers le haut, ledit second arbre (109) étant relié audit premier arbre (107) par des moyens élastiques (110) qui le maintiennent sollicité vers le haut.
